# EUROPÄISCHE PATENTSCHRIFT

(11) **EP 1 528 371 B1**
(45) Veröffentlichungstag und Bekanntmachung des Hinweises auf die Patenterteilung: **14.03.2007**
(21) Anmeldenummer: 03025082.3
(22) Anmeldetag: 03.11.2003
(51) Int. Cl.: G01F 1/32, F24D 3/08, F24H 9/14, F24H 1/52

(54) **Baueinheit für eine Kompaktheizungsanlage**
Assembly for a compact heating installation
Ensemble pour installation de chauffage compact

(43) Veröffentlichungstag der Anmeldung: 04.05.2005
(73) Patentinhaber: GRUNDFOS A/S, DK-8850 Bjerringbro (DK)
(72) Erfinder: Finn, Mathiesen Hoj, 8200 Aarhuis N (DK)
(74) Vertreter: Hemmer, Arnd

(56) Entgegenhaltungen:
- EP-A- 0 828 117
- EP-A- 1 031 795
- EP-A- 1 130 341
- GB-A- 2 250 334
- US-A- 4 718 283
- US-A- 6 003 384
- PATENT ABSTRACTS OF JAPAN vol. 004, no. 024 (E-173), 29. Februar 1980 (1980-02-29) & JP 54 161968 A (YOKOGAWA HOKUSHIN ELECTRIC CORP), 22. Dezember 1979 (1979-12-22)

## Beschreibung

Die Erfindung betrifft eine Baueinheit für eine Kompaktheizungsanlage, insbesondere für eine Gastherme.

Derartige Kompaktheizungsanlagen, insbesondere Gasthermen, dienen zur Erwärmung von Heizungswasser für die Raumheizung und zur Erwärmung von Brauchwasser. Dabei ist eine Vielzahl von Einzelkomponenten in einem gemeinsamen kompakten Gehäuse vereint. Während bei älteren Konstruktionen die Einzelelemente über Rohre miteinander verbunden wurden, was relativ aufwändig war, geht man seit geraumer Zeit vermehrt dazu über, den gesamten Verrohrungskomplex mit den erforderlichen Armaturen einschließlich Aufnahmen für einzelne Aggregate wie Pumpe, Ventile und dergleichen als Baueinheit auszuführen, welche üblicherweise aus einem oder mehreren Spritzgussteilen aus Kunststoff gefertigt sind. Eine solche Baueinheit bildet einen integrierten Wasserkreislauf, welcher insbesondere die Anschlüsse für den Raumheizungskreislauf sowie für die Brauchwasserzu- und -abfuhr, die erforderlichen Ventile sowie eine Umwälzpumpe enthält. Eine solche Baueinheit ist beispielsweise aus EP 1 130 341 A2 bekannt.

Für die Brauchwassererwärmung ist ein Strömungssensor erforderlich, welcher über die Strömung im Brauchwasserkreislauf bzw. der Brauchwasserleitung erfasst, ob Brauchwasser angefordert wird, um dann den Brenner und die Umwälzpumpe zur Erwärmung des Brauchwassers aktivieren zu können. Ein solcher Strömungssensor ist beispielsweise aus JP 54-161968 oder US 4,718,283 bekannt. Ein solcher Strömungssensor muss über Flanschverbindungen mit den Brauchwasserleitungen in der Kompaktheizungsanlage verbunden werden, wodurch sich die Zahl der Einzelteile und Montageschritte bei der Montage der Kompaktheizungsanlage erhöht.

Es ist daher Aufgabe der Erfindung, eine Baueinheit für eine Kompaktheizungsanlage, insbesondere für eine Gastherme zu schaffen, welche eine kostengünstige Anordnung eines Strömungssensors in der Brauchwasserleitung bzw. dem Brauchwasserkreislauf der Kompaktheizungsanlage ermöglicht.

Diese Aufgabe wird durch eine Baueinheit für eine Kompaktheizungsanlage mit den im Anspruch 1 angegebenen Merkmalen gelöst. Bevorzugte Ausführungsformen ergeben sich aus den Unteransprüchen.

Die erfindungsgemäße Baueinheit für eine Kompaktheizungsanlage, insbesondere für eine Gastherme, weist zumindest eine Leitung für zu erwärmendes Brauchwasser auf. Vorzugsweise ist direkt an der Baueinheit ein Wärmetauscher, beispielsweise ein Plattenwärmetauscher, angebracht, in welchem das Brauchwasser über den Heizungskreislauf erwärmt wird. Dazu wird das kalte Brauchwasser über eine entsprechende Leitung in der Baueinheit dem Wärmetauscher zu- und über eine weitere Leitung in der Baueinheit von dem Plattenwärmetauscher abgeführt. Dementsprechend sind an der Baueinheit vorzugsweise Anschlüsse für den Brauchwasserein- und Brauchwasserausgang vorhanden, um die Kompaktheizungsanlage mit entsprechenden Kalt- und Warmwasserleitungen der Hausinstallation zu verbinden. Die Brauchwasserleitung im Inneren der Baueinheit weist zumindest einen Leitungsabschnitt auf, in welchem ein Strömungssensor mit einer Obstruktion und einer Messsonde angeordnet ist. Ein solcher Strömungssensor wirkt in der Weise, dass durch die Obstruktion in der Leitung Wirbel in der Strömung erzeugt werden, welche mit Hilfe der Messsonde ausgemessen werden. Die Messsonde erfasst in dem von der Obstruktion erzeugten Wirbel Druckunterschiede bzw. Druckfrequenzen, aus denen bei bekannter Größe der Obstruktion die Strömungsgeschwindigkeit bestimmt werden kann. Ein solcher Sensoraufbau ist beispielsweise aus EP 02 028 959 bekannt. In dem Leitungsabschnitt ist zur Anordnung der Messsonde eine Aufnahme bzw. Öffnung ausgebildet. Die Obstruktion ist im Inneren des Leitungsabschnittes vorzugsweise einstückig mit diesem im Spritzgussverfahren ausgebildet. Um die Obstruktion auf einfache Weise im Inneren des Leitungsabschnittes ausbilden zu können, ist an zwei einander entgegengesetzten Enden des Leitungsabschnittes erfindungsgemäß jeweils eine Öffnung vorgesehen, sodass der Leitungsabschnitt mittels zweier Ziehkerne ausbildbar ist. Ferner ist der Leitungsabschnitt daher vorzugsweise jeweils zumindest zwischen den Öffnungen und der Obstruktion in seiner Längsrichtung ohne Hinterschneidungen ausgebildet. Die Ziehkerne können nach dem Spritzgießen der Baueinheit mit dem Leitungsabschnitt durch die Öffnungen herausgezogen werden. In dem Leitungsabschnitt zwischen Öffnungen und Obstruktion sind bevorzugt keine Hinterschneidungen bzw. Stufen oder Vorsprünge vorhanden, welche ein Entnehmen der Kerne verhindern oder weitere Kerne erfordern würden. Auf diese Weise kann die Obstruktion beim Spritzgießen der Baueinheit aus Kunststoff einstückig in dem Leitungsabschnitt für die Brauchwasserversorgung ausgebildet werden, ohne dass teure Schmelzkerne erforderlich wären. So können die Fertigung der Baueinheit vereinfacht und die Herstellungskosten für die Baueinheit und somit der Kompaktheizungsanlage verringert werden.

Vorzugsweise verläuft der Leitungsabschnitt zumindest zwischen einer der Öffnungen und der Obstruktion gerade. So kann der Ziehkern zur Ausbildung dieses Leitungsabschnittes in einer linearen Bewegung in Längsrichtung des geraden Leitungsabschnittes durch die Öffnung herausgezogen werden. Der gerade Verlauf des Leitungsabschnittes ermöglicht ferner eine optimale Anströmung der Obstruktion, um eine sichere Funktion des Strömungssensors zur Erfassung des Brauchwasserbedarfes sicherzustellen.

Dazu verläuft weiter bevorzugt der gesamte Leitungsabschnitt zwischen den beiden einander entgegengesetzten Öffnungen gerade. Dies begünstigt den Strömungsverlauf in dem Leitungsabschnitt und somit die Erfassung der Strömung durch den in dem Leitungsabschnitt angeordneten Strömungssensor. Darüber hinaus kann die Obstruktion sehr einfach durch zwei in Längsrichtung des Leitungsabschnittes linear bewegliche Ziehkerne ausgebildet werden. Dies begünstigt insbesondere die Ausbildung einer bezüglich der Längsachse des Leitungsabschnittes symmetrischen Obstruktion.

Gemäß einer weiteren bevorzugten Ausführungsform dient eine der Öffnungen in dem Leitungsabschnitt gleichzeitig als Anschluss für eine Brauchwasserleitung, vorzugsweise für das erwärmte Brauchwasser. Auf diese Weise wird die Zahl der erforderlichen Öffnungen in der Baueinheit reduziert. Insbesondere wird die Zahl der Öffnungen, welche lediglich zur Fertigung, nicht jedoch im späteren Betrieb der Baueinheit benötigt werden, reduziert. So muss die eine Öffnung, welche zur Ausbildung der Obstruktion im Inneren des Leitungsabschnittes mittels eines Ziehkernes benötigt wird, nicht nachträglich verschlossen werden, da sie dann später als Brauchwasseranschluss dient. Somit erfüllt die Öffnung in diesem Leitungsabschnitt zwei Funktionen.

Weiter bevorzugt ist eine der Öffnungen verschlossen ausgebildet. Falls eine oder beide der Öffnungen zur Ausbildung der Obstruktion im späteren Betrieb nicht benötigt werden, können diese durch entsprechende Stopfen oder Verschlüsse geschlossen werden. Vorzugsweise wird jedoch zumindest eine der Öffnungen zur Verbindung des Leitungsabschnittes mit externen Leitungen verwendet, sodass lediglich eine der Öffnungen verschlossen werden muss.

Gemäß einer besonderen Ausführungsform kann eine der Öffnungen als Anschluss zum Befüllen eines Heizkreislaufes dienen. Das heißt an die Öffnung ist eine Leitung angeschlossen bzw. anschließbar, welche mit dem Heizkreislauf verbunden ist. In dieser Leitung ist zusätzlich zumindest ein Ventil vorgesehen, um die Leitung gezielt öffnen zu können, um Brauchwasser aus dem Leitungsabschnitt des Brauchwasserkreislaufes in den Heizkreislauf für die Raumheizung einzuleiten, um den Raumheizungskreislauf mit Wasser zu befüllen. Die Leitung zwischen dem Brauchwasserkreislauf und dem Heizungskreislauf kann fest oder abnehmbar ausgebildet sein. Wenn die Leitung fest ausgebildet ist, ist sie vorzugsweise ebenfalls in die Baueinheit integriert. Dadurch, dass die eine Öffnung für den Ziehkern zur Ausbildung der Obstruktion im Inneren des Leitungsabschnittes im Betrieb als Anschluss zum Befüllen eines Heizkreislaufes verwendet wird, ist es nicht erforderlich, diese Öffnung zu verschließen. Vielmehr wird mit der Öffnung eine Befüllleitung oder ein Ventil verbunden. Besonders bevorzugt wird eine der beiden Öffnungen an den entgegengesetzten Enden des Leitungsabschnittes Anschluss zum Befüllen des Heizkreislaufes und die andere Öffnung als Anschluss für eine Brauchwasserleitung verwendet. Diese Ausgestaltung hat den Vorteil, dass keine zusätzliche, das heißt im Betrieb nicht benötigte Öffnung, für die Ziehkerne zur Ausbildung des Leitungsabschnittes und der Obstruktion in der Baueinheit vorgesehen werden muss.

Weiter bevorzugt ist in Einbaulage der Baueinheit die erste der Öffnungen zu einer Unterseite und die zweite der Öffnungen zu einer Oberseite der Baueinheit gerichtet. Die Einbaulage der Baueinheit entspricht der Lage der Baueinheit im montierten Zustand der Kompaktheizungsanlage. Die Baueinheit ist dabei üblicherweise so angeordnet, dass ein an der Baueinheit angebrachter Wärmetauscher, insbesondere Plattenwärmetauscher horizontal angeordnet ist. Die Anordnung der Öffnungen an Ober- und Unterseite der Baueinheit ermöglicht, dass beim Spritzguss die Ziehkerne von zwei entgegengesetzten Seiten vorzugsweise entlang derselben Achse in entgegengesetzten Richtungen zugeführt und aus der fertig gegossenen Baueinheit entnommen werden können. Auf die Weise kann ein langer und vorzugsweise gerader Kanal gebildet werden, welcher sich durch die gesamte Baueinheit hindurch erstreckt. Diese Ausgestaltung hat den Vorteil, dass der Leitungsabschnitt, in dem die Obstruktion ausgebildet ist, möglichst lang ausgebildet werden kann, um für die Strömung eine ausreichend lange Beruhigungsstrecke zu haben, und mittels der Obstruktion gezielte Wirbel für den Strömungssensor in der Strömung erzeugen zu können. Der Leitungsabschnitt, welcher sich zwischen den Öffnungen erstreckt, erstreckt sich vorzugsweise über die gesamte Breite bzw. Höhe der Baueinheit, sodass bei vorgegebenen Außenabmessungen der Baueinheit der vorhandene Bauraum optimal ausgenutzt wird, um einen möglichst langen Leitungsabschnitt zur Aufnahme des Strömungssensors zu schaffen.

Besonders bevorzugt verläuft der Leitungsabschnitt in Einbaulage der Baueinheit in senkrechter Richtung. So kann die gesamte Bauhöhe der Baueinheit für den Leitungsabschnitt und eine möglichst lange Beruhigungsstrecke ausgenutzt werden. Ferner sind die Öffnungen vorzugsweise an Ober- und Unterseite der Baueinheit frei zugänglich, sodass sie entweder leicht verschlossen oder mit den gewünschten Anbauteilen und/oder externen Leitungen verbunden werden können.

Vorzugsweise ist eine der Öffnungen an der Unterseite der Baueinheit angeordnet und dient als Anschluss für eine Brauchwasserleitung. Bevorzugt sind alle Anschlüsse der Kompaktheizungsanlage in einer Ebene an der Unterseite der Baueinheit angeordnet. Dies sind die Anschlüsse für die Brauchwasserzufuhr und das erwärmte Brauchwasser sowie die zwei Anschlüsse für den Raumheizungskreislauf. Der Leitungsabschnitt mit dem Strömungssensor erstreckt sich somit vorzugsweise von der Oberseite der Baueinheit zum unteren Ende der Baueinheit und dient der Ableitung von erwärmte Brauchwasser vom Wärmetauscher, in welchem das Brauchwasser erwärmt wird, zu dem Warmwasseranschluss an der Unterseite der Baueinheit. Der in diesem Leitungsabschnitt angeordnete Strömungssensor erfasst die Brauchwasserströmung und gegebenenfalls deren Geschwindigkeit, wenn Brauchwasser durch Öffnen eines Wasserhahns an einer mit der Baueinheit verbundenen Leitung angefordert wird.

Der Leitungsabschnitt weist weiter bevorzugt in der Nähe einer der beiden Öffnungen, vorzugsweise in der Nähe der oberen Öffnung, einen Anschluss zur Verbindung mit einem Wärmetauscher auf. Der Anschluss zur Verbindung mit einem Wärmetauscher ist als Öffnung oder als weiterer in die Baueinheit integrierter Leitungsabschnitt ausgebildet, welcher die Verbindung zu einem an die Baueinheit angesetzten Wärmetauscher herstellt. Diese Anschlussöffnung ist vorzugsweise in der Nähe der oberen Öffnung des beschriebenen Leitungsabschnittes angeordnet. So erstreckt sich der Leitungsabschnitt mit dem Strömungssensor und der in dem Leitungsabschnitt ausgebildeten Obstruktion von der Unterseite der Baueinheit, an welcher der Leitungsabschnitt mit einer Brauchwasserleitung verbunden ist zur Oberseite der Baueinheit, an der der Wärmetauscher bzw. dessen Brauchwasserausgang angesetzt ist. Vorzugsweise ist der Wärmetauscher rückseitig an die Baueinheit angesetzt, wobei der Ausgang für das zu erwärmende Brauchwasser in der Nähe der Oberseite der Baueinheit gelegen ist. Auf diese Weise wird bei einer möglichst kompakten Baueinheit gleichzeitig ein ausreichend langer und gerader Leitungsabschnitt zur Anordnung des Strömungssensors geschaffen. Alternativ kann auch der Brauchwassereingang des Wärmetauschers oben angeordnet und mit dem Leitungsabschnitt mit dem Strömungssensor verbunden sein. Dann liegt der Strömungssensor im Brauchwasserzulauf anstatt, wie oben beschrieben, im Brauchwasserablauf.

Nachfolgend wird eine Ausführungsform der Erfindung beispielhaft anhand der beigefügten Figuren beschrieben. In diesen zeigt:
- Fig. 1:: schematisch den Aufbau einer Kompaktheizungsanlage mit der erfindungsgemäßen Baueinheit,
- Fig. 2:: eine perspektivische Gesamtansicht der Baueinheit von vorne,
- Fig. 3:: eine Ansicht entsprechend Fig. 1, jedoch ohne Plattenwärmetauscher und Umwälzpumpe,
- Fig. 4:: eine perspektivische Ansicht der Baueinheit gemäß Fig. 2 von der Rückseite her gesehen und
- Fig. 5:: eine Schnittansicht der Baueinheit gemäß Fig. 1 bis 3 entlang der Längsachse X des Leitungsabschnittes mit dem Strömungssensor.

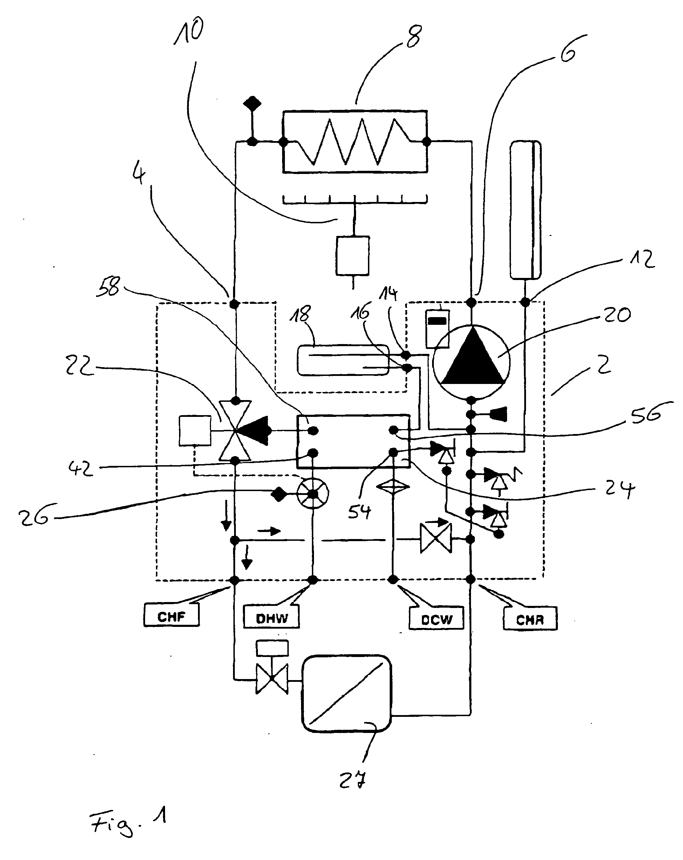

Figur 1 zeigt in einer schematischen Darstellung den Aufbau einer Kompaktheizungsanlage mit der erfindungsgemäßen Baueinheit 2, deren Komponenten in Figur 1 durch gestrichelte Linien umgrenzt sind. Alle im Inneren der gestrichelten Umgrenzung angeordneten Bauteile sind in die Baueinheit integriert. Die Baueinheit weist im Wesentlichen neun Anschlüsse zur Verbindung mit externen Rohrleitungen bzw. Komponenten auf. Dies sind die Anschlüsse CHF und CHR für den Raumheizungskreislauf, der Anschluss DCW für die Zufuhr von kaltem Brauchwasser und der Anschluss DHW für das erwärmte Brauchwasser. Darüber hinaus weist die Baueinheit Anschlüsse 4 und 6 zum Anschluss des Primärwärmetauschers 8 in dem Heizungskessel auf. In dem Primärwärmetauscher 8 wird über einen Brenner 10, vorzugsweise einen Gasbrenner, das Wasser im Primärkreislauf erhitzt. Ferner sind an der Baueinheit 2 ein Anschluss 12 für ein Ausgleichsgefäß und zwei Anschlüsse 14 und 16 zum Anschluss eines Wasserspeichers 18 zum Speichern von erwärmtem Wasser im Primärkreislauf vorgesehen.

In der Baueinheit 2 sind in bekannter Weise als wesentliche,Komponenten eine Pumpe 20, ein 2/3-Wege-Ventil 22 sowie ein Sekundärwärmetauscher 24 angeordnet. Im Primärkreislauf strömt das Fluid bzw. Wasser, welches von der Pumpe 20 gefördert wird, von der Pumpe 20 durch den Anschluss 6 zu dem Primärwärmetauscher und über den Anschluss 4 zurück in die Baueinheit 2. Dort erreicht es das 2/3-Wege-Ventil, welches den Primärkreislauf zwischen dem Sekundärwärmetauscher 24 und dem Anschluss CHF für die Raumheizung umschalten kann. Wenn das 2/3-Wege-Ventil 22 auf Raumheizung geschaltet ist, fließt das Wasser über den Anschluss CHF durch die Heizkörper in den zu heizenden Räumen zurück zu dem Anschluss CHR an der Baueinheit 2 und in dieser wieder zur Saugseite der Pumpe 20. Wenn das 2/3-Wege-Ventil 22 zur Brauchwassererwärmung umgeschaltet wird, strömt das Wasser im Primärkreislauf vom 2/3-Wege-Ventil durch den vorzugsweise als Plattenwärmetauscher ausgebildeten Sekundärwärmetauscher 24 und von dort über den Anschluss 16 durch den Wasserspeicher 18 und über den Anschluss 14 zurück in die Baueinheit und in dieser zur Saugseite der Pumpe 20. Gleichzeitig wird über die Anschlüsse DHW und DCW das zu erwärmende Brauchwasser durch den Sekundärwärmetauscher 24 geleitet und dort über den Primärkreislauf erwärmt.

In dem Wasserspeicher 18, welcher als isolierter Tank ausgebildet ist, wird eine bestimmte Menge des erwärmten Fluids bzw. Wassers des Primärkreislaufes zwischengespeichert, um eine schnellere Brauchwassererwärmung zu ermöglichen. Dazu wird bei Betrieb der Kompaktheizungsanlage in Zeitabständen das 2/3-Wege-Ventil auf Brauchwassererwärmung umgeschaltet, auch wenn kein Brauchwasser entnommen wir. Auf diese Weise wird durch den Primärwärmetauscher 8 erwärmtes Wasser dem Wasserspeicher 18 zugeführt und dort gespeichert. Dieser Vorgang kann beispielsweise über einen in dem Wasserspeicher 18 vorgesehenen Temperatursensor gestartet werden. Wenn nun Brauchwasser entnommen wird, wird dieses über einen Strömungssensor 26 erfasst.

Dies veranlasst die Steuerung der Heizungsanlage das 2/3-Wege-Ventil auf Brauchwassererwärmung umzuschalten und den Brenner 10 in dem Kessel zu starten, um dass Wasser des Primärkreislaufes zu erwärmen und dann über den Sekundärwärmetauscher 24 wie beschrieben das Brauchwasser zu erwärmen. Gleich nach Erfassung der Brauchwasserentnahme über den Strömungsmesser 26 wird gemeinsam mit dem Umschalten des 2/3-Wege-Ventils 22 auf Brauchwassererwärmung auch die Pumpe 20 in Betrieb gesetzt, sodass das in dem Wasserspeicher 18 gespeicherte warme Heizungswasser von der Pumpe 20 durch den Primärwärmetauscher 8 und das 2/3-Wege-Ventil 22 dem Sekundärwärmetauscher 24 zugeführt wird. So kann in dem Sekundärwärmetauscher 24 bereits Brauchwasser erwärmt werden, bevor der Heizkessel mit dem Brenner 10 seine Betriebstemperatur zum Aufheizen des Primärkreislaufes über den Primärwärmetauscher 8 erreicht.

Der im vorliegenden Beispiel gezeigte Wasserspeicher 18 ist jedoch nicht unbedingt erforderlich, vielmehr könnten die Anschlüsse 14 und 16 auch kurzgeschlossen oder nicht vorhanden sein, das heißt die Ausgangsseite des Sekundärwärmetauschers 24 direkt mit der Saugseite der Pumpe 20 verbunden sein.

Die übrigen Bauteile der Baueinheit 2, insbesondere Überdruck- und Füllventile, Bypassleitung, etc. entsprechen den Anordnungen bekannter Baueinheiten für Kompaktheizungsanlagen, weshalb an dieser Stelle auf eine nähere Erläuterung verzichtet wird. Auch der mit den Anschlüssen CHF und CHR verbundene Raumheizungskreislauf, welcher in Fig. 1 lediglich durch einen Wärmetauscher bzw. Heizkörper 27 mit zugehörigem Ventil, vorzugsweise Thermostatventil, angedeutet ist, entspricht üblichen Anordnungen von Heizungskreisläufen mit einem oder mehreren Wärmetauschern bzw. Heizkörpern.

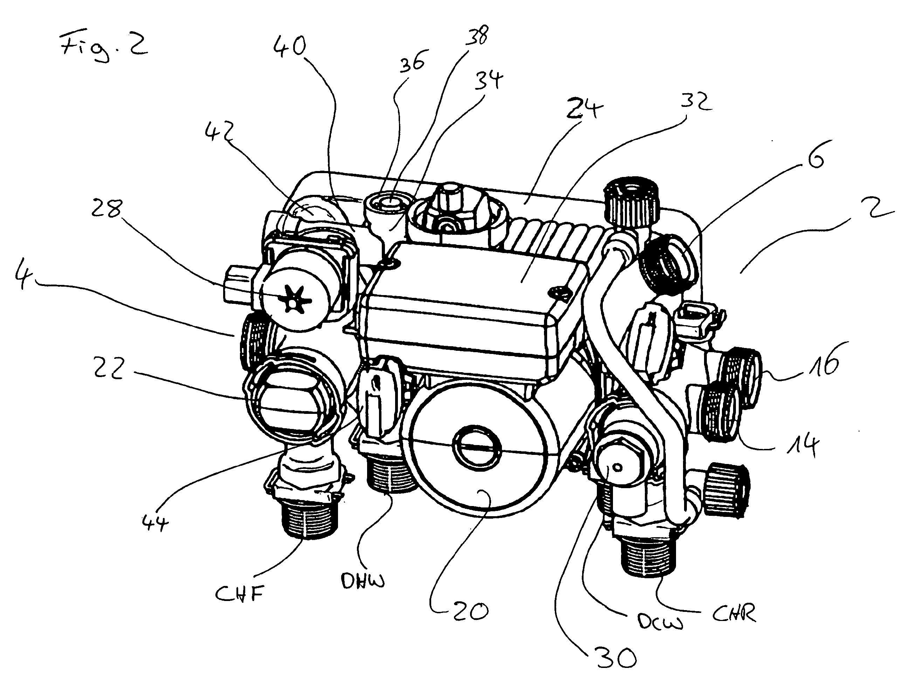

Die konstruktive Ausgestaltung der erfindungsgemäßen Baueinheit wird beispielhaft anhand der Fig. 2 bis 5 beschrieben. Figur 2 zeigt eine perspektivische Gesamtansicht der erfindungsgemäßen Baueinheit. Zentral angeordnet ist die Pumpe 20. An einer Seite der Pumpe 20, in Figur 2 links, ist das 2/3-Wege-Ventil 22 angeordnet, welches über einen Stellmotor 28 betätigt wird. An der entgegengesetzten Seite der Pumpe 20, das heißt in Figur 2 rechts, ist ein Leitungsabschnitt mit einer Aufnahme 30 für einen Schmutzabscheider ausgebildet. An der Unterseite der Baueinheit 2 sind die Anschlüsse CHF, CHR, DHW und DCW zum Anschluss des Heizungskreislaufs bzw. der Brauchwasserleitungen an die Kompaktheizungsanlage ausgebildet. Zentral oberhalb der Pumpe 20 ist ein Klemmenkasten 32 zum Anschluss der Pumpe und zur Aufnahme von Elektronikkomponenten angeordnet. Rückseitig ist an der Baueinheit 2 der Sekundärwärmetauscher 24 in Form eines Plattenwärmetauschers angebracht. Seitlich am Zwei/Drei-Wege-Ventil 22 ist der Anschluss 4 und an der Druckseite der Pumpe 20 der Anschluss 6 zur Verbindung mit dem Primärwärmetauscher 8 (hier nicht gezeigt) ausgebildet. Wie bereits anhand von Figur 1 erläutert, beinhaltet die Baueinheit alle Leitungsabschnitte bzw. Komponenten der Fluidkreisläufe zwischen dem extern angeschlossenen Primärwärmetauscher 8 sowie den Anschlüssen CHF, CHR, DHW und DCW für den Raumheizungskreislauf und die Brauchwasserversorgung.

In der Ausführungsform gemäß Figur 2 sind in dem Aufnahmegehäuse 30 für den Schmutzabscheider die Anschlüsse 14 und 16 für einen Wasserspeicher zur Speicherung erwärmten Wassers des Primärkreislaufes angeordnet. Die Anschlüsse 14 und 16 sind als Anschlussstutzen mit Gewinde einstückig mit dem Anschlussgehäuse 30 ausgebildet. Vorzugsweise ist die gesamte Baueinheit 2 einstückig als Spritzgussteil ausgebildet. Alternativ kann die Baueinheit aus einzelnen Gehäusekomponenten zusammengesetzt sein. So können der Gehäuseteil mit dem Aufnahmegehäuse 30, der Gehäuseteil zur Aufnahme der Pumpe 20 sowie der Gehäuseteil zur Aufnahme des 2/3-Wege-Ventils als separate Bauteile im Spritzguss gefertigt werden und anschließend zu der Baueinheit 2 zusammengesetzt werden.

Der Anschluss DHW für erwärmtes Brauchwasser steht in Verbindung mit einem Leitungsabschnitt bzw. Kanal 34, welcher sich von der Unterseite der Baueinheit ausgehend von dem Anschluss DHW senkrecht nach oben bis zur Oberseite der Baueinheit 2 erstreckt. Die obere Stirnseite des Kanals 34 weist an seinem oberen, dem Anschluss DHW abgewandten Stirnende eine Öffnung 36 auf, welche durch ein Verschlusselement 38 verschlossen ist. Unterhalb der Öffnung 36 zweigt im Wesentlichen rechtwinklig von dem Kanal 34 ein Verbindungskanal 40 ab, welcher die Verbindung des Kanals 34 zu einem Anschluss 42 des Sekundärwärmetauschers 24 herstellt. Am Anschluss 42 tritt das erwärmte Brauchwasser aus dem Sekundärwärmetauscher 24 aus und in den Verbindungskanal 40 ein.

Von der Vorderseite in Fig. 2, welche auch in Einbaulage der Baueinheit 2 die Vorderseite bildet, ist in den Kanal 34 eine Messsonde 44 des Strömungssensors 26 eingesetzt. Die Messsonde 44 ist ein kombinierter Druck-/Temperaturaufnehmer, welcher sowohl einen Druck bzw. Druckdifferenzen und die Temperatur in dem durch den Kanal 34 strömenden Brauwasser bestimmen kann. Die Erfassung der Temperatur des erwärmten Brauchwassers wird zur Regelung der Brauchwassererwärmung, insbesondere zur Steuerung des Brenners 10 bei der Brauchwassererwärmung benötigt. Der Druckaufnehmer der Messsonde 44 bildet einen Teil des Strömungssensors 26, welcher eine Strömung in dem Kanal 34 erfasst. Wenn eine Strömung in dem Kanal 34 erfasst wird, bedeutet dies, dass ein Wasserhahn zur Entnahme von erwärmtem Brauchwasser geöffnet ist, sodass eine Anforderung nach erwärmtem Wasser besteht. Dann schaltet die Steuerungseinheit der Kompaktheizungsanlage wie beschrieben den Brenner 10 und die Pumpe 20 ein sowie das 2/3-Wege-Ventil 22 auf Brauchwassererwärmung. Auch wenn im vorliegenden Fall eine Messsonde 44 als kombinierter Temperatur- und Drucksensor eingesetzt wird, ist der Temperatursensor nicht unbedingt erforderlich. So kann der Temperatursensor auch als separater Sensor ausgebildet und an anderer Stelle als die Messsonde 44 in der Baueinheit 2 angeordnet sein.

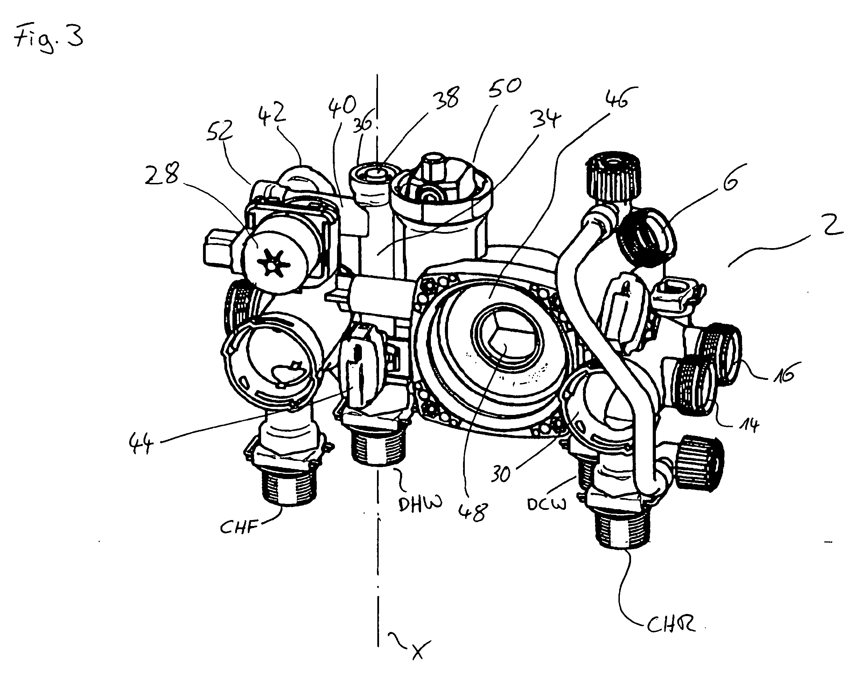

Fig. 3 zeigt eine Ansicht der Baueinheit 2 entsprechend Fig. 2, wobei der Sekundärwärmetauscher 24, die Pumpe 20 mit dem Klemmenkasten 32 sowie das 2/3-Wege-Ventil 22 aus der Baueinheit 2 entnommen bzw. von dieser abgenommen sind. Ferner ist aus dem Aufnahmegehäuse 30 der Schmutzabscheider entfernt. Zentral in der Baueinheit 2 ist das Einschubgehäuse 46 für die Pumpe 20 mit dem Saugmund 48 der Pumpe 20 ausgebildet. Oberhalb des Einschubraumes bzw. -gehäuses 46 ist mit dem Saugmund 48 verbunden ein Luftabscheider 50 an der Saugseite der Pumpe 20 angeordnet. Wie in Fig. 3 zu erkennen ist, erstreckt sich an der Rückseite der Baueinheit 2 vor dem Sekundärwärmetauscher 24 (siehe Fig. 2) der Kanal 34 senkrecht im Wesentlichen über die gesamte Bauhöhe der Baueinheit 2. Durch die gerade hinterschneidungsfreie Ausgestaltung des Kanals 34 mit dem an seinen entgegengesetzten Enden ausgebildeten Öffnungen DHW und 38, ist es möglich, den Kanal 34 allein durch Ziehkerne ohne den Einsatz von Schmelzkernen auszubilden. Der Verbindungskanal 40 kann durch einen weiteren Ziehkern, welcher durch eine Öffnung 52 an dem dem Kanal 34 abgewandten Ende des Verbindungskanals 40 entnommen werden kann, ausgebildet werden. Die Öffnung 52 wird nach Entnahme des Ziehkerns ebenfalls durch ein Verschlusselement verschlossen.

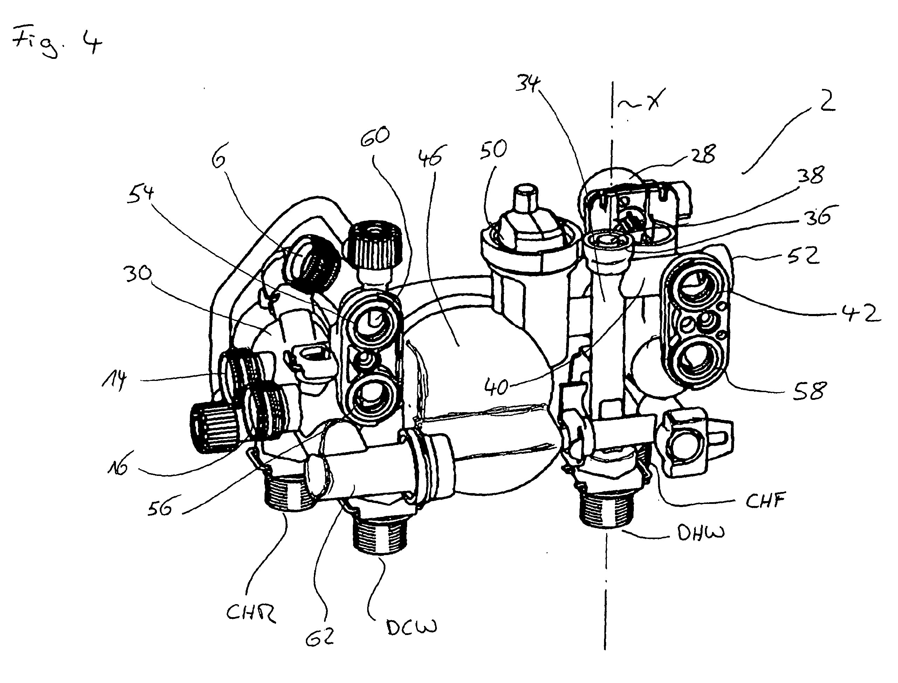

Fig. 4 zeigt die Baueinheit gemäß Fig. 2 von der Rückseite her betrachtet. Von der Rückseite her sind die vier Anschlüsse 42, 54, 56 und 58 für den Sekundärwärmetauscher 24 zu erkennen. Der Anschluss 54 ist über einen sich ebenfalls im Wesentlichen senkrecht durch die Baueinheit 2 erstreckenden Kanal mit dem Anschluss DCW für kaltes Brauchwasser verbunden. Auf diese Weise wird das zu erwärmende Brauchwasser von dem Anschluss DCW über den Kanal 60 und den Anschluss 54 in den Sekundärwärmetauscher 24 (in Fig. 4 nicht gezeigt) eingeleitet. Das erwärmte Brauchwasser tritt aus dem Sekundärwärmetauscher an dem Anschluss 42 aus und fließt von dort im Inneren der Baueinheit 2 durch den Verbindungskanal 40 und den Kanal 34 zu dem Anschluss DHW, an welchem die wohnungs- bzw. hausseitige Warmwasserleitung mit der Kompaktheizungsanlage verbunden wird. Durch den Anschluss 58 wird das Wasser des Heizungskreislaufes von dem 2/3-Wege-Ventil 22 in den Sekundärwärmetauscher 24 zur Erwärmung des Brauchwassers geleitet. Das Wasser des Heizungskreislaufes tritt aus dem Sekundärwärmetauscher am Anschluss 56 aus und fließt von dort im Inneren der Baueinheit 2 in das Aufnahmegehäuse 30 und von dort über den Kanal 62 in das Einschubgehäuse 46 zum Saugmund 48 der Pumpe 20.

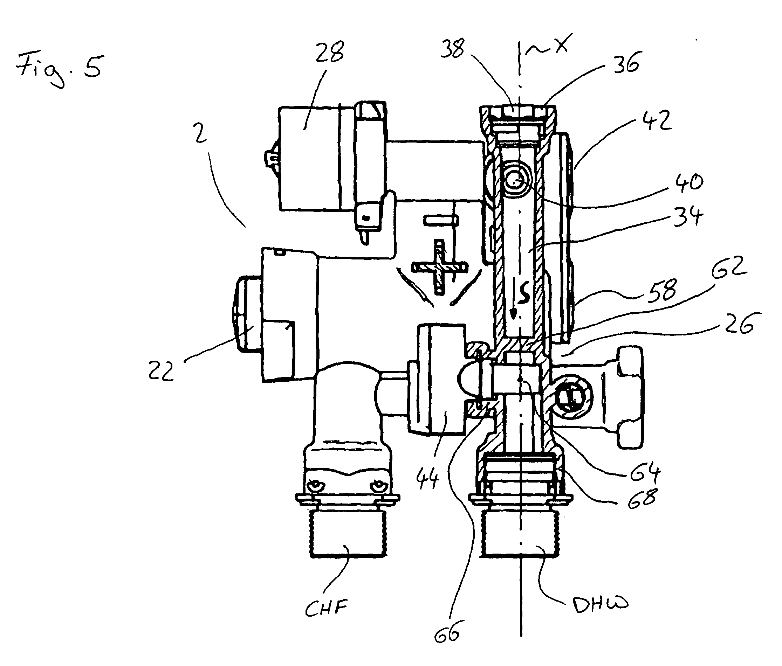

Der Aufbau und die Funktion des Kanals 34 wird näher anhand der Schnittansicht in Fig. 5 erläutert, welche einen Schnitt entlang der Längsachse X des Kanals 34 zeigt. Im Inneren des Kanals 34 ist der Strömungssensor 26 bestehend aus einem Strömungswiderstand bzw. einer Obstruktion 62 und der Messsonde 44 angeordnet. Die Obstruktion 62 ist einstückig mit dem Kanal 34 bzw. der Baueinheit 2 im Spritzguss gefertigt. Die Obstruktion erstreckt sich stabförmig diametral durch den Kanal 34 und weist beispielsweise einen dreieckigen Querschnitt auf. Der genaue Aufbau des Strömungssensors bestehend aus Obstruktion 62 und Messsonde 44 und insbesondere die geometrischen Abmessungen und die Anordnung von Messsonde 44 und Obstruktion 62 sind aus EP 02 028 959.1 bekannt. Die Messsonde 44 ragt in den Strömungskanal 34 hinein, sodass Ihr Druckaufnehmer 64 im Wesentlichen zentral in dem Kanal 34 angeordnet ist. Dabei weist die Messsonde 44 vorzugsweise Druckaufnehmer an zwei entgegengesetzten Seiten auf, um Druckdifferenzen im Inneren des Kanals 34 erfassen zu können. Die Messsonde 44 mit dem Druckaufnehmer 64 ist in Strömungsrichtung S hinter der Obstruktion 62 angeordnet. Durch die Strömung in dem Kanal 34 entstehen in Strömungsrichtung S hinter der Obstruktion 62 Wirbel, welche durch die Messsonde 44 messtechnisch erfasst werden. Dabei erfasst die Messsonde 44 über den Druckaufnehmer 64 Drücke bzw. insbesondere deren Änderungsfrequenzen, aus denen bei bekannten Abmessungen auf die Strömungsgeschwindigkeit im Inneren des Kanals 34 geschlossen werden kann. Die entsprechende messtechnische Auswertung erfolgt durch eine an die Messsonde 44 angeschlossene Auswerteelektronik, welche beispielsweise in dem Klemmenkasten 32 angeordnet sein kann.

Die Messsonde 44 wird durch eine Öffnung 66 von vorne in den Kanal 34 eingesetzt. Die beschriebene gerade Ausgestaltung des Kanals 34, wobei sich der Kanal 34 im Wesentlichen von der Oberseite bis zur Unterseite der Baueinheit 2 über deren gesamte Bauhöhe erstreckt, hat den Vorteil, dass der Kanal 34 möglichst lang ausgebildet werden kann, sodass vor der Obstruktion 62 eine möglichst lange Beruhigungsstrecke geschaffen wird, in welcher sich die Strömung beruhigen bzw. stabilisieren kann, bevor sie den aus Obstruktion 62 und Messsonde 44 gebildeten Strömungssensor 26 erreicht. Die gerade und glatte Ausgestaltung des Kanals 34 mit den an seinen entgegengesetzten Enden ausgebildeten Öffnungen 36 und 68 ermöglicht eine einfache Fertigung des Kanals 34 mit der darin einstückig ausgebildeten Obstruktion 62. So ist es möglich durch die Öffnungen 38 und 68 Ziehkerne in die Form einzusetzen und aus der fertig gegossenen Baueinheit 2 in Richtung der Längsachse X zu entnehmen. Zur Ausbildung der Obstruktion 62 im Inneren des Kanals 34 sind somit keine Schmelzkerne erforderlich. Die Obstruktion 62 wird zwischen den von den entgegengesetzten Öffnungen 36 und 68 in entgegengesetzten Richtungen zugeführten Ziehkernen ausgebildet. Die Öffnung 36 wird im späteren Betrieb durch ein Verschlusselement 38 verschlossen. In die Öffnung 68 wird ein Anschlussstutzen zur Ausbildung des Anschlusse DHW für eine wohnungs- bzw. hausseitige Warmwasserleitung eingesetzt bzw. eingepresst. So können für die Ziehkerne Öffnungen verwendet werden, welche zum Betrieb ohnehin in der Baueinheit 2 vorgesehen werden müssen, sodass die Anzahl der nach dem Spritzgießen zu verschließenden Öffnungen minimiert wird. Zu diesem Zweck könnte auch die Öffnung 36 zum Anschluss weiterer Komponenten, beispielsweise einer Füllleitung bzw. eines Füllventils zum Befüllen des Heizungskreislaufes mit Wasser angeordnet werden.

Auch wenn im gezeigten Beispiel der Kanal 34 von der Öffnung 36 bis zu dem Anschluss DHW gerade ausgebildet ist, könnte der Kanal 34 auch gewinkelt oder gekrümmt ausgebildet werden. Damit der Kanal 34 erfindungsgemäß durch Ziehkerne ausgebildet werden kann, ist es lediglich erforderlich, dass in dem Kanal 34 zwischen der Obstruktion 62 und den Öffnungen 36 und 68 keinerlei Hinterschneidungen ausgebildet sind, sodass nach dem Spritzgießen die Ziehkerne aus den Öffnungen 36 und 68 herausgezogen werden können. Bei einer gewinkelten Ausgestaltung könnte der Kanal beispielsweise ausgehend von der Obstruktion 62 jeweils zu der Öffnung 38 und der Öffnung 68 geradlinig verlaufen, wobei der Leitungsabschnitt zwischen der Obstruktion 62 und der Öffnung 36 zu dem Leitungsabschnitt zwischen der Obstruktion 62 und der Öffnung 68 abgewinkelt verläuft. Zur Ausbildung eines gekrümmten Kanals 34 könnten gekrümmte Ziehkerne, welche entlang entsprechend gekrümmter Bahnen aus den Öffnungen 38 und 68 herausgezogen werden können, Verwendung finden. Die Öffnungen 66 sowie der Verbindungskanal 40, welche mit dem Kanal 34 in Verbindung stehen, können durch weitere Ziehkerne ausgebildet werden. So kann bei der erfindungsgemäßen Baueinheit auf die Verwendung von Schmelzkernen zur Ausbildung des Kanals 34 mit dem Strömungssensor 26 verzichtet werden.

### Bezugszeichenlist

- 2: Baueinheit
- 4: Anschluss
- 6: Anschluss
- 8: Primärwärmetauscher
- 10: Brenner
- 12: Anschluss für Ausgleichsgefäß
- 14: Anschluss für Wasserspeicher
- 16: Anschluss für Wasserspeicher
- 18: Wasserspeicher
- 20: Pumpe
- 22: 2/3-Wege-Ventil
- 24: Sekundärwärmetauscher
- 26: Strömungssensor
- 27: Heizkörper
- 28: Stellmotor
- 30: Aufnahmegehäuse
- 32: Klemmenkasten
- 34: Kanal
- 36: Öffnung
- 38: Verschlusselement
- 40: Verbindungskanal
- 42: Anschluss
- 44: Messsonde
- 46: Einschubgehäuse
- 48: Saugmund
- 50: Luftabscheider
- 52: Öffnung
- 54: Anschluss für Sekundärwärmetauscher
- 56: Anschluss für Sekundärwärmetauscher
- 58: Anschluss für Sekundärwärmetauscher

- 60: Kanal
- 62: Obstruktion
- 64: Druckaufnehmer
- 66: Öffnung
- 68: Öffnung

- DCW: Anschluss für kaltes Brauchwasser
- DHW: Anschluss für warmes Brauchwasser
- DHF: Anschluss für Raumheizungs-Vorlauf
- CHR: Anschluss für Raumheizungs-Rücklauf
- S: Strömungsrichtung
- X: Längsachse

## Patentansprüche

1. Baueinheit für eine Kompaktheizungsanlage, insbesondere für eine Gastherme, wobei die Baueinheit (2) als Spritzgussteil aus Kunststoff ausgebildet ist und einen integrierten Wasserkreislauf bildet, welcher die Anschlüsse für den Raumheizungskreislauf (CHF, CHR) sowie für die Brauchwasserzu- und abfuhr (DCW, DHW), ein 2/3-Wege-Ventil (22), einen Sekundärwärmetauscher (24) und eine Umwälzpumpe (20) enthält, und wobei in der Baueinheit (2) zumindest eine Leitung für zu erwärmendes Brauchwasser angeordnet ist, welche zumindest einen Leitungsabschnitt (34) aufweist, in welchem ein Strömungssensor (26) angeordnet ist, **dadurch gekennzeichnet, dass** der Strömungssensor eine Obstruktion (62) und eine Messsonde (44) aufweist und dass an zwei einander entgegengesetzten Enden des Leitungsabschnittes (34) jeweils eine Öffnung (36, 68) vorgesehen ist und der Leitungsabschnitt zumindest zwischen den Öffnungen (36, 68) und der Obstruktion derart ausgebildet ist, dass er mittels zweier Ziehkerne ausbildbar ist.

2. Baueinheit nach Anspruch 1, **dadurch gekennzeichnet, dass** der Leitungsabschnitt (34) zumindest zwischen einer der Öffnungen (36, 68) und der Obstruktion (62) gerade verläuft.

3. Baueinheit nach Anspruch 1 oder 2, **dadurch gekennzeichnet, dass** der Leitungsabschnitt (34) zwischen den beiden einander entgegengesetzten Öffnungen (36, 68) gerade verläuft.

4. Baueinheit nach einem der vorangehenden Ansprüche, **dadurch gekennzeichnet, dass** eine der Öffnungen (68) gleichzeitig als Anschluss (DHW) für eine Brauchwasserleitung, vorzugsweise für das erwärmte Brauchwasser dient.

5. Baueinheit nach einem der vorangehenden Ansprüche, **dadurch gekennzeichnet, dass** eine der Öffnungen (36) verschlossen ist.

6. Baueinheit nach einem der vorangehenden Ansprüche, **dadurch gekennzeichnet, dass** eine der Öffnungen (36) als Anschluss zum Befüllen eines Heizkreislaufes dienen kann.

7. Baueinheit nach einem der vorangehenden Ansprüche, **dadurch gekennzeichnet, dass** in Einbaulage der Baueinheit (2) die erste der Öffnungen (68) zu einer Unterseite und die zweite der Öffnungen (36) zu einer Oberseite der Baueinheit (2) hin gerichtet ist.

8. Baueinheit nach einem der vorangehenden Ansprüche, **dadurch gekennzeichnet, dass** der Leitungsabschnitt (34) sich in Einbaulage der Baueinheit (2) in senkrechter Richtung (X) erstreckt.

9. Baueinheit nach einem der vorangehenden Ansprüche, **dadurch gekennzeichnet, dass** eine der Öffnungen (68) an der Unterseite der Baueinheit (2) angeordnet ist und als Anschluss (DHW) für eine Brauchwasserleitung dienen kann,

10. Baueinheit nach einem der vorangehenden Ansprüche, **dadurch gekennzeichnet, dass** der Leitungsabschnitt (34) in der Nähe einer der beiden Öffnungen (36, 68), vorzugsweise in der Nähe der oberen Öffnung (36), einen Anschluss (42) zur Verbindung mit einem Wärmetauscher (24) aufweist.

## Claims

1. An assembly for a compact heating installation, in particular for a gas boiler, wherein the assembly (2) is designed as an injection moulded part of plastic, and forms an integrated water circuit, which contains the connections for the room heating circuit (CHF, CHR) as well as for the supply and discharge of service water (DCW, DHW), a 2/3-way valve (22), a secondary heat exchanger (24) and a circulation pump (20), and wherein at least one conduit for service water to be heated and which comprises at least one conduit section (34) in which a flow sensor (26) is arranged, is arranged in the assembly (2), **characterised in that** the flow sensor comprises an obstruction (62) and a measurement probe (44), and that in each case an opening (36, 68) is provided at two ends of the conduit section (34) which are opposite to one another, and the conduit section at least between the openings (36, 68) and the obstruction, is designed in a manner such that it may be formed by way of two drawing dies.

2. An assembly according to claim 1, **characterised in that** the conduit section (34) runs in a straight line at least between one of the openings (36, 68) and the obstruction (62).

3. An assembly according to claim 1 or 2, **characterised in that** the conduit section (34) runs in a straight line between the openings (36, 68) which are opposite to one another.

4. An assembly according to one of the preceding claims, **characterised in that** one of the openings (68) simultaneously serves as a connection (DHW) for a service water conduit, preferably for the heated service water.

5. An assembly according to one of the preceding claims, **characterised in that** one of the openings (36) is closed.

6. An assembly according to one of the preceding claims, **characterised in that** one of the openings (36) may serve as a connection for filling a heating circuit.

7. An assembly according to one of the preceding claims, **characterised in that** in the installation position of the assembly (2), the first of the openings (68) is directed to a lower side and the second of the openings (36) to an upper side of the assembly (2).

8. An assembly according to one of the preceding claims, **characterised in that** the conduit section (34) in the installation position of the assembly (2) extends in the perpendicular direction (X).

9. An assembly according to one of the preceding claims, **characterised in that** one of the openings (68) is arranged on the lower side of the assembly (2) and may serve as a connection (DHW) for a service water conduit.

10. An assembly according to one of the preceding claims, **characterised in that** the conduit section (34) comprises a connection (42) for the connection to a heat exchanger (24) in the vicinity of one of the two openings (36, 38), preferably in the vicinity of the upper opening (36).

## Revendications

1. Unité modulaire pour une installation de chauffage compacte, en particulier pour une chaudière à gaz, l'unité modulaire (2) étant réalisée sous forme d'un élément en matière plastique moulé par injection et formant un circuit d'eau intégré, qui comporte les raccords pour le circuit de chauffage de locaux (CHF, CHR) ainsi que pour l'arrivée et le départ d'eau sanitaire (DCW, DHW), une vanne à 2/3 voies (22), un échangeur de chaleur secondaire (24) et une pompe de recirculation (20), étant précisé que dans l'unité modulaire (2) est disposé au moins un conduit pour de l'eau sanitaire à échauffer, qui présente au moins un tronçon de conduit (34), dans lequel est disposé un détecteur de débit (26), **caractérisée en ce que** le détecteur de débit comprend un obstacle (62) et une sonde de mesure (44) et **en ce qu'**à deux extrémités, opposées l'une à l'autre, du tronçon de conduit (34), est respectivement prévue une ouverture (36, 68), et le tronçon de conduit, au moins entre les ouvertures (36, 68) et l'obstacle, est configuré d'une manière telle, qu'il puisse être réalisé au moyen de deux noyaux coulissants.

2. Unité modulaire selon la revendication 1, **caractérisée en ce que** le tronçon de conduit (34), au moins entre l'une des ouvertures (36, 68) et l'obstacle (62), se développe sous une allure rectiligne.

3. Unité modulaire selon la revendication 1 ou 2, **caractérisée en ce que** le tronçon de conduit (34) se développe sous une allure rectiligne entre les deux ouvertures (36, 68) opposées l'une à l'autre.

4. Unité modulaire selon l'une des revendications précédentes, **caractérisée en ce que** l'une des ouvertures (68) sert en même temps de raccord (DHW) pour un conduit d'eau sanitaire, de préférence pour l'eau sanitaire échauffée.

5. Unité modulaire selon l'une des revendications précédentes, **caractérisée en ce que** l'une des ouvertures (36) est obturée.

6. Unité modulaire selon l'une des revendications précédentes, **caractérisée en ce que** l'une des ouvertures (36) peut servir de raccord pour le remplissage d'un circuit de chauffage.

7. Unité modulaire selon l'une des revendications précédentes, **caractérisée en ce que** dans la position de montage de l'unité modulaire (2), la première des ouvertures (68) est dirigée vers un côté inférieur et la seconde des ouvertures (36) est dirigée vers un côté supérieur de l'unité modulaire (2).

8. Unité modulaire selon l'une des revendications précédentes, **caractérisée en ce que** le tronçon de conduit (34) s'étend en direction verticale (X) dans la position de montage de l'unité modulaire (2).

9. Unité modulaire selon l'une des revendications précédentes, **caractérisée en ce que** l'une des ouvertures (68) est située sur le côté inférieur de l'unité modulaire (2) et peut servir de raccord (DHW) pour un conduit d'eau sanitaire.

10. Unité modulaire selon l'une des revendications précédentes, **caractérisée en ce qu'**au voisinage de l'une des deux ouvertures (36, 68), de préférence au voisinage de l'ouverture supérieure (36), le tronçon de conduit (34) présente un raccord (42), pour être relié à un échangeur de chaleur (24).
